# EUROPÄISCHE PATENTSCHRIFT

(11) **EP 3 157 274 B1**
(45) Veröffentlichungstag und Bekanntmachung des Hinweises auf die Patenterteilung: **06.11.2019**
(21) Anmeldenummer: 16193332.0
(22) Anmeldetag: 11.10.2016
(51) Int. Cl.: H04L 29/06, H04W 4/021, H04W 4/21, H04W 12/02, H04W 12/08, H04W 48/04, H04W 84/18, H04L 29/08, H04W 4/80

(54) **ANORDNUNG ZUR ERMÖGLICHUNG DRAHTLOSER KOMMUNIKATION IN EINEM BEGRENZTEN RAUM**
SYSTEM FOR ENABLING WIRELESS COMMUNICATION IN A SPECIFIED SPACE
SYSTÈME POUR UNE COMMUNICATION WIFI DANS UNE ESPACE LIMITÉE

(30) Priorität: 12.10.2015 DE 102015117335
(43) Veröffentlichungstag der Anmeldung: 19.04.2017
(73) Patentinhaber: Tanriverdi, Ufuk, 91541 Rothenburg ob der Tauber (DE)
(72) Erfinder: Tanriverdi, Ufuk, 91541 Rothenburg ob der Tauber (DE)
(74) Vertreter: Pöhner, Wilfried Anton

(56) Entgegenhaltungen:
- WO-A1-2014/051577
- US-A1- 2011 264 735
- US-A1- 2015 231 494

## Beschreibung

Die vorliegende Erfindung bezieht sich auf den Bereich der Telekommunikation. Genauer beschreibt die vorliegende Erfindung eine Anordnung und ein Verfahren zur Ermöglichung drahtloser Kommunikation in einem begrenzten Raum gemäß den Oberbegriffen der Ansprüche 1 und 19.

Die Zahl mobiler Kommunikationsgeräte, die mit kurzreichweitigen drahtlosen Schnittstellen wie Bluetooth oder Wifi ausgerüstet und daher in der Lage sind, direkt drahtlos miteinander Daten auszutauschen, hat in den letzten Jahren und Jahrzehnten in den entwickelnden Ländern erheblich zugenommen. Heute besitzt nahezu jedermann mindestens ein Gerät dieser Art, wie Handy, Smartphone oder Tablet und führt es meist auch mit sich. Eine beliebte Verwendungsmöglichkeit solcher Geräte ist das Austauschen von Sprach- oder Textnachrichten zwischen zwei und mehr Benutzern, wobei letzteres durch Konferenzschaltung bzw. Gruppenschaltung realisiert wird. Ist das Gerät in ein langreichweitiges Mobilfunknetz eingebunden, kann dieser Austausch mit beliebigen anderen angeschlossenen Benutzern erfolgen, wobei aber im Falle von Telefongesprächen oder Kurznachrichten (SMS) die Nummer des gewünschten Kommunikationspartners bekannt sein muss.

Andere Möglichkeiten der Kontaktaufnahme werden über bestimmte, meist gewerbliche oder kommerziell vertriebene Software zur Verfügung gestellt und erlauben das Einrichten von virtuellen Räumen zur Unterhaltung mit anderen Benutzern (Chatrooms), traditionell nur mittels Text bzw. Zeichennachrichten, aber neuerdings, wenn die Datenverbindung entsprechende Übertragungskapazitäten besitzt, auch per Sprach- oder Videotelefonie. Andere Benutzer können hierbei meist durch Suchen in einer Datenbank gefunden werden, indem man Kriterien wie Alter, Name, Benutzername und dergleichen angibt. Eine Suche nach Aufenthaltsort ist oft auch möglich, es handelt sich hierbei aber meist um einen vom Benutzer bei der Registrierung spezifizierten Ort der weder regelmäßig aktualisiert, noch überhaupt vom jeweiligen Programm verifiziert wird. Diese Dienste laufen meist jedoch über das Internet und sind dementsprechend weltweit unabhängig vom Aufenthaltsort verfügbar. Außerdem ist ein Zugang zum Internet nötig um daran teilzunehmen.

Es gibt aber auch Geräte und/oder Programme, die die eingangs erwähnten Schnittstellen zur direkten Drahtloskommunikation zwischen Endgeräten nutzen, um mit anderen in der Nähe befindlichen, und zum Beispiel gleiche Interessen teilenden Menschen Kontakt aufzunehmen. Ein Beispiel für eines der ersten Geräte, das eine solche Funktionalität, sehr rudimentär, zur Verfügung stellte war das in Japan Ende der 90er Jahre sehr populäre 'Lovegety' der japanischen Firma Erfolg, das Nutzern durch verschiedene Einstellmöglichkeiten die gewünschte Art der Interaktion auswählen lies und dann, sofern eingeschaltet, den Nutzer durch ein Signal auf die Präsenz von anderen Trägern dieses Gerätes mit gleichem Interaktionswunsch hinwies, wobei die Reichweite einige zehn Meter betrug.

Dieses Gerät verwendete noch eine proprietäre Schnittstelle, doch schon einige Jahre später waren Bluetooth und später auch Wifi als Drahtlosschnittstellen so verbreitet, das andere Anbieter Dienste mit im Prinzip ähnlicher, jedoch umfangreicherer Kontaktaufnahmefunktionalität, meist auch um die Möglichkeit des Nachrichtenaustausches erweitert, in Form einer Software bereitstellen konnten, die ein Kontaktsuchender nur auf seinem schon vorhandenen mobilen Endgerät installieren musste. Bekannte Beispiele hierfür sind die 'Bluedating'-Software der ETH Zürich, 'Serendipity' des MIT oder die 'StreetSpark'-App der gleichnamigen Firma. Bei diesen Produkten funktioniert die Kontaktaufnahme und Kommunikation prinzipiell überall, sofern mindestens zwei Teilnehmer vorhanden sind, die beide die entsprechende Software installiert und aktiviert haben und sich in Reichweite der verwendeten Drahtlosschnittstelle, Bluetooth oder Wifi, zueinander befinden. Auch ist meist nur der direkte Kontakt zwischen zwei Nutzern vorgesehen, ohne die Möglichkeit Gruppengespräche zu beginnen.

Eine andere schon angedachte Ausformung virtueller Unterhaltsräume (Chatrooms) sind solche, deren Benutzung an den Aufenthaltsort des Benutzers bzw. von ihm verwendeten mobilen Endgeräts gebunden ist. Dies ist besonders dann interessant, wenn die Besucher dieses Ortes ein gemeinsames Interesse verbindet, wie etwa eine Sportstätte oder ein Museum. Ein solcher, an einen bestimmten Ort gebundener bzw. auf einen bestimmten Raum begrenzter Kommunikationsdienst ist aber auch interessant zum Beispiel für Gaststätten, Lokale, Bars oder jeden anderen Ort, an dem Menschen zu ungezwungener Kontaktaufnahme aufgelegt sind. Ein solches Angebot könnte Kommunikationsbeschränkungen überwinden helfen, etwa in einer Diskothek, wo oft die Lautstärke der Musik Gespräche nahezu unmöglich macht oder dem Ort eine zusätzliche Attraktivität verleihen, besonders dann, wenn diese Kommunikationsmöglichkeit nur exklusiv dort verfügbar ist.

Verschiedene Ansätze, den Zugang zu einem Netzwerk, zur Kommunikation oder für einen anderen Zweck, auf einen Ort zu beschränken, wurden schon verfolgt.

Ein solches System wird zum Beispiel im Europäischen Patent EP 1285516 offenbart. Es ist so gestaltet, dass mehrere mobile Endgeräte sich drahtlos über die Empfangseinheit mit einem Server verbinden, der den teilnehmenden Endgeräten dann Zugang zu einem oder mehreren virtuellen Unterhaltsräumen (Chatrooms) gewährt, falls sie sich an einem bestimmten Ort, z. B. einer Sportstätte befinden. Weiterhin soll der Server mit dem Internet verbunden sein, um den teilnehmenden mobilen Netzgeräten Zugriff auf weitere online verfügbare ortsgebundene Dienste zu ermöglichen. Die Methode der Positionsbestimmung wird nicht weiter spezifiziert, soll aber anhand eines Signalmerkmals erfolgen.

Des Weiteren werden in der Offenbarungsschrift US 2003/0037110 Methoden und Apparate vorgestellt, die es Benutzern mobiler Endgeräte ermöglichen, ortsgebundene virtuelle Unterhaltsräume zu schaffen, deren Position und Form der erstellende Benutzer selbst festlegen kann. Alle in einem dieser Räume eingeschriebenen Benutzer erhalten vom System sowohl die Textnachrichten sowie Positionen der anderen Teilnehmer, wobei beides dann, falls die entsprechende Software aktiv ist, auf dem Display angezeigt wird. Eine Ortsbestimmungsmethode wird ebenfalls nicht spezifiziert, doch ist aus der Ausgestaltung ersichtlich, dass keine sehr hohe Anforderung an die Genauigkeit bestehen, denn es sollen gemäß der Erfindung auch vom Benutzer selbst eingegebene Positionsdaten (Koordinaten) akzeptiert werden können.

Im Patent US 8,401,519 sowie der darauf aufbauenden Fortsetzungsanmeldung US 2014/0120873 wird ein System und eine Methode beschrieben, wie ein mobiles Endgerät nur an einer bestimmten Position für ein Netzwerk freigeschaltet werden kann. Das Vorgehen ist hierbei, in Reichweite einer Basisstation ein Profil des Radiospektrums zu erstellen, dieses mit einem gespeicherten Sollprofil zu vergleichen und nur bei genügender Übereinstimmung den Zugang zum Netzwerk freizugeben. Diese vereinfachte Form der in der wissenschaftlichen Literatur über die Positionsbestimmung kurzreichweitiger Drahtlosgeräte hinlänglich bekannten Methode der Radiokartierung (finger-printing) funktioniert für eine bestimmte Stelle mit mehr oder minder konstanter Radiowellenumgebung vielleicht relativ zuverlässig, ist jedoch für größere Räume nur umständlich zu verwirklichen und besonders bei einer sich schnell und häufig dynamisch ändernden Radiowellenumgebung auch nicht sehr genau.

Die Offenlegungsschrift US 2011/0270680, eine Fortsetzung des Patents US 8,005,057, spezifiziert eine Architektur, die es Geräten mit nur kurzreichweitiger Drahtlosverbindung ermöglicht über längere Distanzen zu kommunizieren und zwar mittels einer Pluralität von Servern, die über ein physisches Gebiet verteilt sind und von denen jeder eine bestimmte Zone abdeckt in der er Kontakt mit den dort befindlichen kurzreichweitigen Endgeräten hält. Weiterhin verfügen die Server über einen Internetzugang, sodass sie über das Internetuntereinander Daten austauschen können. In der dort offenbarten Erfindung wird die Benutzung dieses Systems nicht nur an den Aufenthaltsort der Endgeräte geknüpft, sondern auch an das Teilnehmen an einem Proximity-Marketing-System bei dem die Benutzer für das Betrachten vom System verteilter Werbebotschaften Nutzungszeit sammeln können.

Die Veröffentlichung WO 00/22860 beschreibt ein Verfahren durch das Benutzer mobiler Endgeräte über die Position anderer Benutzer bzw. genauer über deren Eintreten in vorher definierte Gebiete informiert werden. Dies soll gemäß der Beschreibung z. B. so verwendet werden, dass gespeicherte Suchkriterien des ersten Benutzers mit den in den mobilen Endgeräten der anderen Nutzer öffentlich zugänglichen Informationen vergleichen und bei einem Treffer der Erstbenutzer informiert wird.

Im Schriftstück GB 2483090 werden Kommunikationsgeräte offenbart, die in der Lage sein sollen, ein Peer-to-Peer Netzwerk aufzubauen um unter anderem die Kommunikation zwischen den Räumen eines Gebäudes zu ermöglichen. Diese Erfindung beschreibt aber explizit neue, dedizierte Kommunikationsgeräte und beschreibt nicht die Erweiterung der Funktionalität schon vorhandener Geräte, etwa durch Installation einer Software. Weiterhin muss das Netzwerk dort manuell konfiguriert werden. Es ist dort auch nicht angedacht, sicherzustellen, dass der Zugang zum Netzwerk auf eine begrenzte Räumlichkeit beschränkt ist.

All diese Beispiele haben zu eigen, dass Netzwerkfunktionalität ortsgebunden bereitgestellt werden soll. Bei den ersten beiden wird sogar jeweils auf die Kommunikation bzw. den drahtlosen Austausch von Nachrichten Bezug genommen. Die Lokalisierungsmethoden die hier verwendet werden sollen, sind allerdings entweder gar nicht erst spezifiziert oder wenn spezifiziert, nach derzeitigem Stand der Forschung und der Technik erwiesenermaßen nicht präzise genug um eine Positionsbestimmung genauer als auf bestenfalls einige Meter zu ermöglichen, was der Größenordnung üblicher Räume oder Gasträume entspricht. Weiterhin wird bei all diesen Vorschlägen vom Vorhandensein einer zentralen Servereinheit ausgegangen, die sowohl die Freischaltung als auch die Abwicklung des Datenverkehrs steuert.

Dies ist auch der Fall bei dem in der US Patentanmeldung US 2011/0264735 beschriebenen System und dem dieses verwendenden Verfahren zum Aufbau eines lokalen sozialen Netzwerks. Es wird dort vorgeschlagen, zunächst in einem Registrierungsprozess über eine auf einem mit dem Internet verbundenen Server geführte Datenbank ein mobiles Datenkommunikationsgerät mit einem Benutzerprofil eines sozialen Netzwerks, beispielhaft genannt sind Facebook und Myspace, zu verknüpfen. Tritt ein dermaßen registriertes Datenkommunikationsgerät in eine sogenannte interaktive Zone ein, welche durch den Empfangsbereich einer Gruppe von mit einem lokalen Server in Verbindung stehender Detektoren, beispielsweise Bluetooth Detektoren, gebildet wird, ein, so wird es vom lokalen Server freigeschaltet, also erkannt, authentifiziert und eingeloggt, und Daten, etwa über andere in der gleichen Region befindliche Benutzer, deren Soziales-Netzwerk-Profil Ähnlichkeiten aufweist, werden zu dem Datenkommunikationsgerät gesendet. Zum Austausch von Nachrichten zwischen den Nutzern wird vorgeschlagen, einen Messaging Server zwischenzuschalten. Eine direkte Kommunikation zwischen den Datenkommunikationsgeräten wird nicht offenbart.

Aufgabe der vorliegenden Erfindung ist es daher eine Anordnung zu entwickeln, die es Benutzern mobiler Endgeräte ermöglicht, an einem auf kurzreichweitigen Drahtlosverbindungen aufbauenden Kommunikationsnetzwerk zum Austausch von Text-, Sprach-, Bild- und anderer Nachrichten teilzunehmen, wobei dieses Netzwerk nur innerhalb eines begrenzten Raums zugänglich sein soll und im Wesentlichen ohne eine zentrale Steuer- oder Servereinheit auskommt. Gelöst wird diese Aufgabe durch eine Anordnung mit den Anspruch 1 angegebenen Merkmalen, und ein diese einsetzendes Verfahren nach dem Anspruch 19.

Die in Anspruch 1 offenbarten Signalgeber (engl. beacons) stellen in dem begrenzten Raum ein, drahtloses oder drahtgebundenes, Freigabesignal zur Verfügung, das für die mobilen Endgeräte empfangbar ist und aufgrund dessen letztere zur Teilnahme an einem lokalen Netzwerk N freigeschaltet werden. Dieses der Datenkommunikation zwischen den Endgeräten dienende Netzwerk ist dadurch charakterisiert, das zur Verteilung und Zustellung des Datenstroms nicht notwendig eine vor Ort installierte Hardware benötigt wird (die Signalgeber sind in die Datenkommunikation nicht notwendig eingebunden). Es handelt sich vielmehr um ein dezentral organisiertes Netzwerk, welches sich im Wesentlichen aus den freigeschalteten mobilen Endgeräten zusammensetzt und bei dem die mobilen Endgeräte zumindest teilweise selbst die Verwaltung der Netzwerkresourcen und die Datenweiterleitung übernehmen. Es soll jedoch nicht ausgeschlossen sein, dass, etwa um Lücken in der räumlichen Abdeckung zu schließen oder die verfügbare Übertragungskapazität zu erhöhen, ein Teil oder alle der Signalgeber zur Datenweiterleitung verwendet werden können.

Nach dem erfindungsgemäßen Verfahren senden die Freigabesignalgeber kontinuierlich bzw. in quasi-kontinuierlichen Zeitabständen ein Freigabesignal oder eine digitale Freigabebotschaft über eine Drahtlosschnittstelle/ein Drahtlosprotokoll, für welches die mobilen Endgeräten empfangbar ist. Aus diesem Signal bzw. der gesendeten Botschaft, entweder eines oder mehrerer der Signalgeber, leitet ein empfangendes, entsprechend vorbereitetes mobiles Endgerät dann eine Information ab, anhand derer es zur Teilnahme an einem virtuellen, durch die Gesamtheit der freigeschalteten Mobilen Endgeräte gebildeten Kommunikationsnetzwerk berechtigt, d.h. freigeschaltet wird. Zwischen den freigeschalteten Endgeräten findet dann entsprechend den Wünschen der Nutzer Datenkommunikation in der Form von Austausch von Zeichen-, Text-, Sprach- oder Videobotschaften o.Ä. statt.

Im einfachsten Fall schlägt vorliegende Erfindung vor, dass diese abgeleitete Information ein Identifier ist, welches das Netzwerk der jeweiligen Räumlichkeit als Ganzes identifiziert. Erweiterte Funktionalität lässt sich jedoch erreichen, wenn jeder Signalgeber einen individuellen und einzigartigen Identifier überträgt, und entsprechend vorbereitete mobile Endgeräte über eine Liste aller Identifier der authentischen Signalgeber verfügen. Ist zusätzlich auch Information über den (nominellen) Standort eines jeden Signalgebers vorhanden, kann anhand der zu einem bestimmten Zeitpunkt in Reichweite befindlichen Signalgeber, sowie der Stärke mit der die jeweiligen Signale empfangen werden, durch jedes mobile Endgerät seine ungefähre Position relativ zu den Signalgebern und damit im Raum (oder auch außerhalb) bestimmt werden. Wird dabei eine Position außerhalb des begrenzten Raumes ermittelt erfolgt keine Freigabe. Dies könnte denkbarerweise gegen eine anderweitig, etwa per Satellitennavigation, ermittelte Postion gegengecheckt werden um die Genauigkeit zu erhöhen

Die bisher vorgestellten Methoden wäre jedoch nicht sehr fälschungssicher, da ein böswilliger Teilnehmer, der das Netzwerk auch auf weitere Räumlichkeiten ausdehnen oder sich zumindest missbräuchlich von außerhalb Zugriff darauf verschaffen möchte, nur eigene Signalgeber aufstellen und diese mit einem der bekannten Identifier programmieren müsste. Werden für jeden Signalgeber individuelle Identifier verwendet, könnten Unstimmigkeiten zwar unter Umständen auch an einer Dopplung einer oder mehrerer Identifier erkannt werden, aber ein Dritter der unbefugt von außerhalb der Räumlichkeit auf das eigentlich räumlich begrenzte Netzwerk zugreifen möchte, kann seinen Signalgeber entsprechend schwach senden lassen, so dass für die rechtmäßigen Teilnehmer innerhalb der Räumlichkeit keine Identifierdopplung erkennbar ist. Da die Datenkommunikation der am Netzwerk teilnehmenden Kommunikationsgeräte aber im Wesentlichen direkt stattfindet, müsste sich ein missbräuchlicher Teilnehmer jedoch in der Nähe des Raumes, d.h. knapp außerhalb, befinden oder zumindest dort ein drahtloses Datenrelais aufstellen.

Ein unbefugtes Beitreten außerhalb befindlicher mobiler Kommunikationsgeräte kann aber mittels Authentifizierung wirksam verhindert werden, d.h. dass das Freigabesignal eines Signalgebers von den mobilen Kommunikationsgeräten nur berücksichtigt wird, wenn sich der Signalgeber korrekt authentifizieren kann. Dies kann z.B. unter Verwendung asymmetrischer Verschlüsselung dergestalt implementiert werden, dass jeder Signalgeber über ein Schlüsselpaar verfügt, von denen einer öffentlich, der andere jedoch nur dem Signalgeber bekannt ist. Eine Authentifizierungsanfrage eines Endgerätes bestünde nun darin, eine zufällige, ausreichend lange Zeichenfolge mit dem öffentlichen Schlüssel verschlüsselt an den zu diesem Schlüssel gehörenden Signalgeber zu senden. Nur der authentische Signalgeber verfügt nun über den dazu passenden privaten Schlüssel, mit dem er die verschlüsselte Zeichenfolge wieder entschlüsseln kann. Den Klartext sendet der Signalgeber dann zurück an das/die anfragenden mobilen Endgeräte, welche bei Übereinstimmung mit der ursprünglichen Zeichenfolge den Signalgeber als authentisch akzeptieren. Eine solche Authentifizierung würde sinnvollerweise jedesmal dann durchgeführt, wenn ein Signalgeber in Reichweite kommt. Andere Authentifizierungsmethoden wären ebenfalls anwendbar. Dieses Maß an Fälschungssicherheit erkauft man sich mit erhöhten Hardwareanforderungen, da die Signalgeber zur Durchführung des oben beschriebenen oder auch eines anderen Authentifizierungsschemas über eine gewisse Datenverarbeitungsfähigkeit verfügen müssen.

Ein Vorteil eines solchen ortsgebundenen Kommunikationssystems ist, dass durch die Limitierung der Teilnahme auf eine bestimmte Örtlichkeit eine Exklusivität erreicht wird, der zum Besuch dieser Örtlichkeit animieren kann. Der Verzicht auf einen zentralen Server bedeutet für den Betreiber des Kommunikationssystems deutlich verringerte Investitionskosten, denn außer der Bereitstellung der im einfachsten Fall technisch sehr simplen und kostengünstigen Freigabesignalgeber, muss nur die Vorbereitung der mobilen Endgeräte für die Teilnahme erfolgen, ein Vorgang den prospektive Benutzer durch Herunterladen und Installieren der entsprechenden Software (App) leicht selbst übernehmen können. Ein weiterer wesentlicher Vorteil eines Netzwerks, das die direkten Datenkommunikationsfähigkeiten der Benutzerendgeräte selbst verwendet, ist, dass die Zahl der beteiligten Nutzer sehr groß seinkann, ohne dass für den Netzbetreiber ein Mehraufwand entsteht, zumindest solange der Anteil der über viele Zwischenstationen geleiteten Gesprächen/Chats an den ingesamt stattfindenden nicht zu groß wird.

Als kurzreichweitige Drahtlosverbindungen würden in einer bevorzugten Ausführung entweder Bluetooth oder WiFi infrage kommen, weil fast alle mobilen Geräte heute mit entsprechenden Schnittstellen ausgerüstet sind. Der Vorteil im Vergleich zu über das Mobilfunknetz aufrufbaren internetbasierten Diensten ist, dass bei der hier angedachten lokalen Kommunikation kein Internetzugang benötigt wird und somit auch keine damit verbundenen Kosten anfallen. Moderne Kurzstreckenübertragungsprotokolle wie Bluetooth und WiFi ermöglichen darüber hinaus hohe Bandbreiten bei niedrigem Energieverbrauch, was sogar Videogespräche möglich macht.

Weitere Vorteilhafte Weiterbildungen der Erfindung sollen im Folgenden vorgestellt werden.

Die Netzwerkarchitektur, die den hier gestellten Anforderungen am besten entspricht, ist die eines Netzwerks von gleichgestellten Geräten (Peer-to-Peer Architektur), bei dem jedes Gerät zu bidirektionaler Kommunikation fähig ist und sowohl als Datenquelle wie auch als Datenverbraucher fungiert.

In einer solchen Architektur lässt es sich auch leicht realisieren, zu einem bestimmten Zeitpunkt nicht verwendete Datenübertragungskapazität dazu zu benutzen, eine indirekte Kommunikation zwischen zwei oder mehr anderen mobilen Endgeräten, die aufgrund ihrer Distanz oder eventuell vorhandener Signalbarrieren nicht direkt in Kontakt treten können, zu ermöglichen oder zu beschleunigen. Mit einer solchen Datenweiterleitungsfunktionalität kann auch in größere Räumen, deren Dimension die direkte Reichweite der Drahtlosverbindung übersteigen, ein funktionierendes Netzwerk aufgebaut werden. Hierbei gilt, dass sowohl Bluetooth als auch Wifi bei der Sendestärke üblicher Endgeräte eine Reichweite von maximal einigen Dekametern haben.

Das wesentliche Merkmal des von den Signalgebern erzeugten Freigabesignals besteht darin, dass es nicht von außerhalb des begrenzten Raumes, in dem der Dienst angeboten werden soll, zugänglich ist. Dies wird in einer Ausführung der Erfindung zumindest bei einem Teil der Signalgeber dadurch erreicht, dass das Freigabesignal drahtgebunden zur Verfügung gestellt wird und durch die Positionierung sowie die Länge des signaltragenden Kabels eine Verwendung außerhalb der Räum(e) ausgeschlossen ist. In einer weiteren Ausführungsform senden die Signalgeber ein drahtloses Freigabesignal aus, dass jedoch so schwach ist, das es, zumindest von Empfängern mit einer Empfindlichkeit üblicher mobiler Endgeräte, nicht außerhalb der fraglichen Räume empfangen werden kann.

Darüber hinaus ist jedoch oft vorteilhaft sicherzustellen, dass das Freigabesignal innerhalb des begrenzten Raumes weitgehend überall verfügbar ist, die Freigabesignalgeber, also so verteilt sind, dass sie mit ihren jeweiligen Empfangsbereichen den begrenzten Raum soweit wie möglich abdecken. Dies ist besonders wichtig, wenn der begrenzte Raum eine Räumlichkeit innerhalb eines Gebäudes, etwa der Gastraum einer Gaststätte ist.

Das Freigabesignal kann entweder mit der gleichen Drahtlosschnittstelle und auf dem gleichen Kanal wie die Kommunikation gesendet werden, wodurch sich aber die verfügbare Bandbreite verringert und/oder die Antwortverzögerung (latency) erhöht, oder sie wird vorteilhafterweise auf dafür reservierten Kanälen der gleichen Schnittstelle abgewickelt.
Besonders bevorzugt schlägt vorliegende Erfindung vor, Freigabesignal und Datenkommunikation über verschiedene Drahtlosschnittstellen abzuwickeln, so dass für die Datenkommunikation eine größtmögliche Zahl an Kanälen und damit Bandbreite zur Verfügung steht.

Die Kommunikationsfunktionalität und die Teilnahme daran nur bei Empfang des Freigabesignals wird vorteilhafter Weise durch eine vom Benutzer vor der Teilnahme zu installierenden Software (App) ermöglicht. Diese Software übernimmt auch ein eventuell notwendiges automatisches Weiterleiten von Nachrichten zwischen am Dienst teilnehmenden Endgeräten ohne direkten Kontakt, also die Bereitstellung von indirekten Datenverbindungen, was bei größeren Räumen von Vorteil ist, weil üblicherweise die Datenrate drahtloser Verbindungen mit der Signalstärke zusammenhängt die wiederum mit der Distanz korreliert und dadurch z. B. eine direkte Video- oder auch Sprachtelefonie zwischen Teilnehmer die mehr als ca. 20 m voneinander entfernt sind sonst kaum möglich wäre.

Die bereitgestellte Kommunikationsfunktionalität beinhaltet in einer bevorzugten Ausformung den Austausch von Text bzw. zeichenbasierten Nachrichten, Sprach- und auch Videonachrichten, die Sprach- und Videotelefonie, aber auch das Versenden von Dateien zwischen zwei oder mehrerer Benutzer.

Diese Nachrichten können in jedem Fall zwischen zwei teilnehmenden Benutzern in einem privaten Gespräch ausgetauscht werden. Zusätzlich hierzu ist es sinnvoll auch eine Gruppenkommunikation von drei oder mehr Teilnehmern gleichzeitig zu ermöglichen.

Die Kommunikation über das virtuelle Netzwerk erfolgt bevorzugt innerhalb virtueller Räume, sogenannten Chatrooms, die zwei oder mehr Benutzer umfassen können und die entweder als öffentlich oder als privat deklarierbar sind. Im ersten Fall werden sie in einer von allen teilnehmenden mobilen Endgeräten gemeinsam verwalteten bzw. allen mobilen Endgeräten bekannten Liste der öffentlichen Chatrooms angezeigt und andere Benutzer können auf Wunsch in diese eintreten. Im zweiten Fall erfolgt dies nicht, sodass der Nachrichtenaustausch innerhalb eines solchen privaten Chatrooms auf die von Beginn an beteiligten Nutzer beschränkt bleibt.

Eine weitere vorteilhafte Maßnahme, die Ungestörtheit der Gespräche zu gewährleisten ist es, die Botschaftsinhalte mittels eines auf privaten und öffentlichen Schlüsselpaaren basierenden (asymmetrischen) Verschlüsselungssystems zu verschlüsseln. Die Schlüssel können z.B. für jeden Nutzer bei der Installation der Software erstellt und der öffentliche Schlüssel beim ersten Einloggen in den Kommunikationsdienst an einer bestimmten Örtlichkeit in die Liste der öffentlichen Schlüssel der dortigen Teilnehmer eingetragen werden. Asymmetrische Verschlüsselungssysteme können bei Anwendung der Schlüssel in umgekehrter Reihenfolge auch zum Signieren von Botschaften verwendet werden. Aufgrund dieser Tatsache ist es in einer bevorzugten Ausführungsform der Erfindung ebenfalls möglich eine Signatur, d.h. Authentifizierung, der Botschaften anzubieten.

Bei einem einzigen zusammenhängenden Raum ist aufgrund der verwendeten Netzwerkarchitektur kein Server notwendig. Dies gilt natürlich nicht mehr sobald zwei oder mehr physisch getrennte Räume am selben Netzwerk teilnehmen können sollen, sie also zu einem großen virtuellen Raum zusammengeschaltet werden sollen. Um dies zu erreichen ist es erforderlich, in jedem der Räume mindestens einen mit mindestens einer kurzreichweitigen Schnittstelle ausgestatteten Server zur Verfügung zu stellen, der als Relaisstation fungiert. Die Server müssen in der Lage sein, untereinander zu kommunizieren, wobei die verfügbare Bandbreite sich an dem zu erwartenden Datenaufkommen zwischen den Räumen orientieren sollte.

Über ihre Funktion als Relaisstation hinaus können die Server auch weitere Dienste und Funktionen zur Verfügung stellen, z. B. einen Zugang zum Internet, Informationen zur Örtlichkeit, ein elektronisches Gästebuch, einen Spieleserver oder auch als gemeinsamer Datenspeicher.
Es ist selbstverständlich auch denkbar, dass die Server selbst Freigabesignalgeber sind.

In einer bevorzugten Ausführung würden die Freigabesignalgeber entweder zusätzlich zum Freigabesignal oder darin eingebettet ein eindeutiges Identifikationsmerkmal übertragen. Bei der Verwendung von drahtlosen Signalgebern mit Bluetooth Schnittstelle wäre dies z.B. über die von jedem Bluetoothgerät als Teil des Verbindungsprotokolls ausgestrahlte Identifikationsnummer automatisch gewährleistet. Damit wäre es dem empfangenden mobilen Endgerät möglich eine ungefähre Position innerhalb der Räumlichkeit abzuleiten, falls die Position der Signalgeber bekannt und das durch sie aufgespannte Netz an Empfangsbereichen genügend feinmaschig ist. Es wäre weiterhin interessant die Funktionalität der verwendeten Software so zu erweitern, dass die Position der anderen teilnehmenden Benutzer angezeigt werden kann.

Es folgt eine kurze Beschreibung der Abbildungen. Es zeigen
- Figur 1:: schematische Draufsicht auf zwei getrennte Räume R und R' mit mobilen Endgeräten M und Freigabesignalgebern B sowie Relaisservern S. Die freigeschalteten mobilen Endgeräte bilden gemeinsam ein Netzwerk N.
- Figur 2:: Schematische Draufsicht auf Räume R und R', mit Relaisservern und Freigabesignalgebern in Tischen integriert oder an der Decke installiert, deren zusammengenommene Empfangsbereiche (Reichweitenkreise) den Raum abdecken.
- Figur 3:: Illustration der Konnektivitätsebenen: physische Geräte (unterste), physikalisch mögliche Verbindungen (zweitunterste), das virtuelle Netzwerk N charakterisierenden Verbindungen (zweitoberste), zu einem Zeitpunkt stattfindende Gespräche (oberste).
- Figur 4:: Schematische Draufsicht auf ein Fußballstadion, mit die Tribüne abdeckenden Freigabesignalgebern.

Im Folgenden sollen anhand der Figuren bevorzugte Ausführungsformen vorgestellt werden. Diese sollen die Erfindung jedoch nicht einschränken sondern nur erläutern. Es zeigen

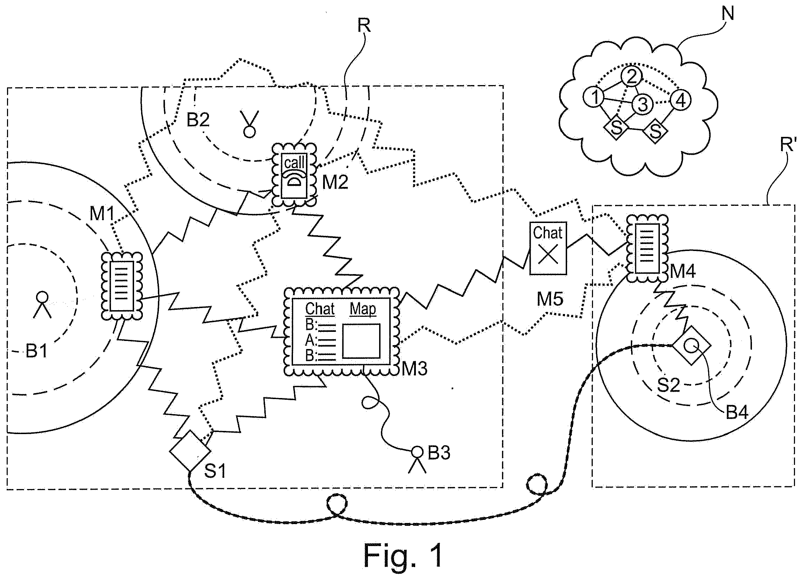

In Figur 1 wird eine Beispielhafte Ausführung vorliegender Erfindung schematisch dargestellt. Zwei getrennte, begrenzte Räume R und R' mit mobilen Endgeräten M1, M2, M3, M4 und M5, Servern S1 und S2 sowie Signalgebern B1, B2, B3 und B4, wobei letzteres im Server S2 integriert ist. Die Signalgeber sind über R und R' verteilt. Die Endgeräte M1, M2, M3 und M4 befinden sich in Reichweite mindestens eines drahtlosen Signalgebers oder sind an einen drahtgebundenen Angeschlossen (M3) und sind deshalb zur Teilnahme am Netzwerk N freigeschaltet, was es ihnen erlaubt auf Wunsch andere freigeschaltete Teilnehmer zu kontaktieren, bzw. von solchen kontaktiert zu werden um Sprach-, Bild- und Zeichennachrichten sowie allgemeine Daten auszutauschen, und direkte, digitalisiert übertragene Sprach- oder Sprachbildgespräche zu führen. Die physisch voneinander getrennten Räume R und R' werden durch die als Relaisstationen fungierenden Server S1 und S2 zu einem virtuellen Raum zusammengeschaltet, sodass der konkrete physische Aufenthaltsort eines Nutzers bzw. seines Endgerätes für die verfügbaren Kommunikationsmöglichkeiten keine Relevanz hat. Die Server sind hierbei nur zur Datenweiterleitung von Chats zund Gesprächen eingesetzt oder bieten darüber hinaus weitere Dienste, wie Internetzugang, Informationen, Spiele oder dergleichen an. Die Datenübertragung zwischen S1 und S2 erfolgt in diesem Beispiel kabelgebunden, weil dies höhere Datenübertragungsraten zulässt als eine drahtlose Kommunikation. Ein mobiles Endgerät M5, welches sich außerhalb von R und R' befindet, aber dennoch physikalisch Datensignale zumindest mit einem in R oder R' befindlichen Endgerät austauschen kann, kann dennoch nicht am Netzwerk N teilnehmen, weil es kein Freigabesignal erhält.

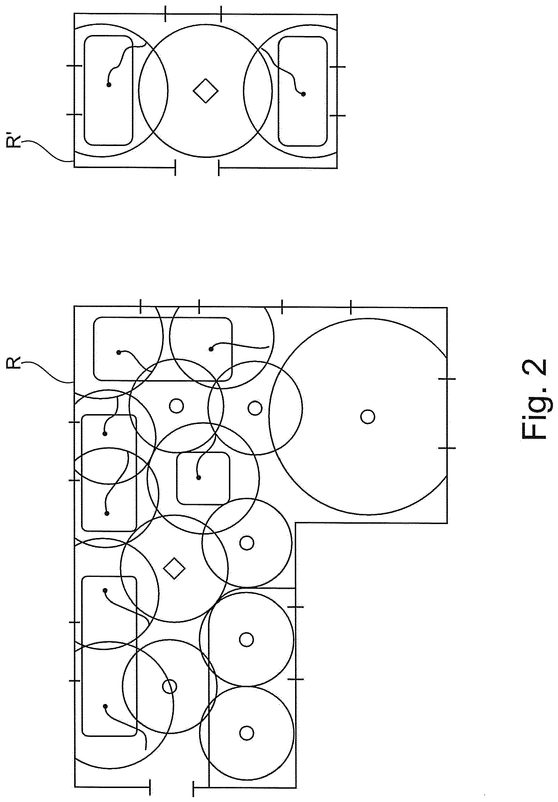

Ähnlich wie Figur 1 zeigt Figur 2 eine Draufsicht auf beispielhafte Räume R und R' wie sie z. B. in einer Gaststätte zu finden sein könnten. Hier steht allerdings die Abdeckung der Räumlichkeit durch die zusammengenommenen Empfangsbereiche der Signalgeber im Vordergrund. Die Signalgeber haben nur eine Reichweite von wenigen Metern, bei den drahtlosen begrenzt durch eine niedrige Sendeleistung, bei den drahtgebundenen durch Wahl ein kurzes Signalkabel, und sind so positioniert, dass sie von üblichen mobilen Endgeräten nicht außerhalb von R und R' zugänglich sind. Die Signalgeber sind entweder in die Tische integriert oder an der Decke angebracht und die Gesamtheit ihrer Empfangsbereiche deckt die beiden Räume nahezu vollständig ab. An zentral gelegenen Stellen in beiden Räumen sind die Datenstromtechnisch verbindenden Relaisserver installiert.

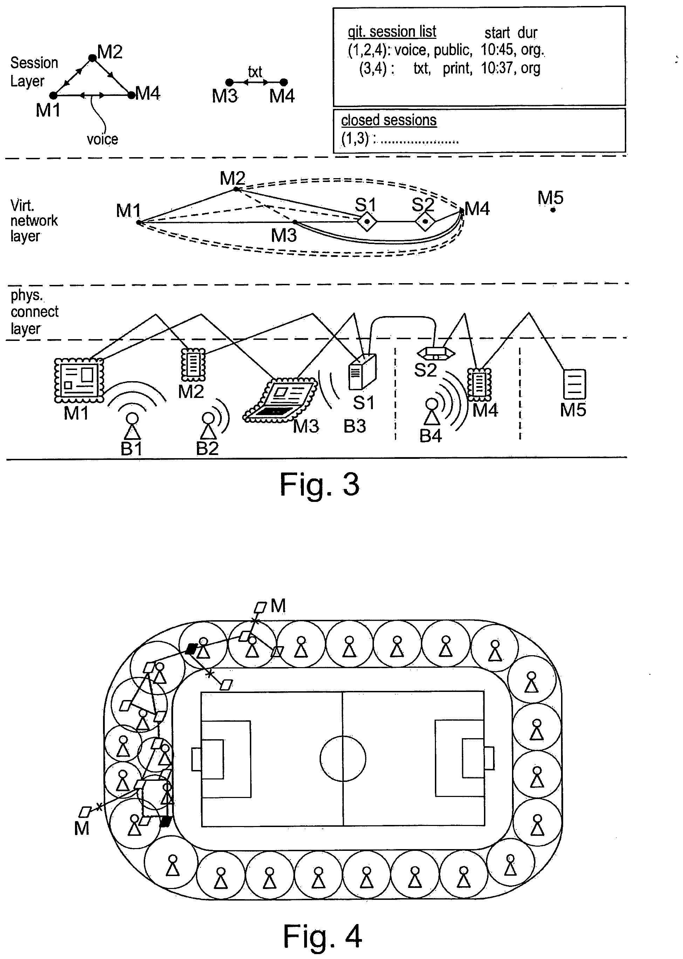

Eine schematische Darstellung der Konnektivität innerhalb einer beispielhaften Konfiguration, die in etwa der in Figur 1 dargestellten entspricht, aufgeteilt nach verschiedenen Betrachtungsebenen ist in Figur 3 gezeigt. Die unterste Ebene wird durch die physischen Geräte, d.h. die mobilen Endgeräte und Signalgeber gebildet. Die nächste Ebene zeigt die physikalische Konnektivität der mobilen Endgeräte, also welche Endgeräte prinzipiell in der Lage sind, über die verwendete Drahtlosschnittstelle unmittelbar miteinander Daten auszutauschen. Dies sind in diesem Beispiel M1 mit M2 und M3, M2 weiterhin mit S1, M3 weiterhin mit S1 und S1 drahtlos, wie erwähnt, mit M2 und M3 sowie drahtgebunden mit S2 sowie S2 mit M4 und M4 weiterhin mit M5. Die nächsthöhere Ebene zeigt das von der Software unter Ausnutzung der physikalisch vorhandenen Verbindungen bereitgestellte virtuelle Netz N. Direkte Verbindungen sind hierbei als durchgezogene, indirekte als gestrichelte Linien dargestellt. Zum betrachteten Zeitpunkt aktive Verbindungen sind durch Verdopplung der Linien hervorgehoben. Die vierte Ebene zeigt ein Beispiel für die zu einem Zeitpunkt aktiven Gespräche und die Art der Kommunikationen, einmal in Form von Verbindungsgraphen und einmal in Form einer Liste der aktiven Gespräche wie sie von der Software auf allen teilnehmenden Endgeräten verwaltet werden würde.

Als weitere Anwendungsmöglichkeit der Erfindung zeigt Figur 4 die schematische Draufsicht eines Fußballstadions mit vollständiger Abdeckung der Tribüne durch Signalgeber (Reichweitenkreise) und auf der Tribüne verteilten mobilen Endgeräte die zusammen einen virtuelles Kommunikationsnetzwerk bilden (gestrichelte Linie) das Kommunikationsweiterleitung auch zwischen weiter entfernten Nutzern ermöglicht (durchgezogene Linie). Endgeräte M außerhalb der Reichweite des Freigabesignals können nicht am gemeinsamen Netzwerk teilnehmen.

### Bezugszeichenliste

- R: Begrenzter Raum
- R': weiterer, physisch von R getrennter Raum
- M: Mobile Endgeräte
- B: Freigabesignalgeber
- S: Relaisserver
- N: Kommunikationsnetzwerk

## Patentansprüche

1. Anordnung zur Ermöglichung drahtloser Kommunikation in einem begrenzten Raum (R, R') umfassend
- einen oder mehrere ortsfeste, ein Freigabesignal bereitstellende Signalgeber (B1, B2, B3, B4),
- zwei oder mehr zu direkter drahtloser Kommunikation untereinander fähige mobile Endgeräte (M1, M2, M3, M4, M5),
wobei jedes der mobilen Endgeräte (M1, M2, M3, M4, M5) jeweils nur bei Empfang des Freigabesignals mindestens eines der Signalgeber (B1, B2, B3, B4) zur Teilnahme an einem virtuellen Netzwerk (N) freigeschaltet ist,
**dadurch gekennzeichnet, dass**
- das virtuelle Netzwerk (N)
o ein Kommunikationsnetzwerk ist, in dem zwischen den freigeschalteten mobilen Endgeräten (M1, M2, M3, M4) eine Datenkommunikation stattfindet, und
∘ durch die Gesamtheit der freigeschalteten mobilen Endgeräte (M1, M2, M3, M4) gebildet ist, und
- die mobilen Endgeräte (M1, M2, M3, M4, M5) so vorbereitet sind, dass sie bei Empfang des Freigabesignals daraus eine Information ableiten, anhand derer sie für die Teilnahme an dem virtuellen Netzwerk (N) freigeschaltet sind,
- wobei die abgeleitete Information
- ein Identifier ist, welcher das virtuelle Netzwerk (N) als Ganzes identifiziert, oder
- ein individueller und einzigartiger Identifier der Signalgeber (B1, B2, B3, B4) ist,
- und die entsprechend vorbereiteten mobilen Endgeräte (M1, M2, M3, M4, M5) über eine Liste aller authentischen Identifier verfügen.

2. Anordnung nach Anspruch 1, **dadurch gekennzeichnet, dass** das virtuelle Netzwerk (N) wenigstens teilweise ein Peer-to-Peer Netzwerk ist.

3. Anordnung nach Anspruch 1 oder 2, **dadurch gekennzeichnet, dass** die Übermittlung des Freigabesignals mindestens eines der Signalgeber (B1, B2, B3, B4) an die mobilen Endgeräte (M1, M2, M3, M4, M5) drahtlos erfolgt.

4. Anordnung nach einem der vorhergehenden Ansprüche, **dadurch gekennzeichnet, dass** die Übermittlung des Freigabesignals mindestens eines der Signalgeber (B1, B2, B3, B4) an eines der mobilen Endgeräte (M1, M2, M3, M4, M5) drahtgebunden erfolgt.

5. Anordnung nach Anspruch 3, **dadurch gekennzeichnet, dass** die Zugänglichkeit des drahtlosen Freigabesignals durch die mobilen Endgeräte (M1, M2, M3, M4, M5) im Wesentlichen auf den begrenzten Raum (R, R') limitiert ist, wobei dies durch eine Kombination aus niedriger Sendeleistung und Positionierung der Signalgeber gewährleistet ist.

6. Anordnung nach Anspruch 4, **dadurch gekennzeichnet, dass** die Zugänglichkeit des drahtgebundenen Freigabesignals durch die mobilen Endgeräte (M1, M2, M3, M4, M5) im Wesentlichen auf den begrenzten Raum (R, R') limitiert ist, wobei dies durch eine Kombination aus Positionierung der Signalgeber und der Länge der signaltragenden Kabel gewährleistet ist.

7. Anordnung nach einem der vorhergehenden Ansprüche, **dadurch gekennzeichnet, dass** die Empfangsbereiche aller Signalgeber zusammengenommen den begrenzten Raum (R, R') abdecken.

8. Anordnung nach einem der vorhergehenden Ansprüche, **dadurch gekennzeichnet, dass** der Raum (R, R') eine Räumlichkeit innerhalb eines Gebäudes ist.

9. Anordnung nach einem der vorhergehenden Ansprüche, **dadurch gekennzeichnet, dass** die mobilen Endgeräte (M1, M2, M3, M4, M5) und/oder die Freigabesignalgeber (B1, B2, B3, B4) so vorbereitet sind, dass sie über das virtuelle Netzwerk (N) laufende Kommunikation zwischen Endgeräten, die nicht direkt in Kontakt treten können, weiterleiten, sofern eine mittelbare Verbindung besteht.

10. Anordnung nach einem der vorhergehenden Ansprüche, **dadurch gekennzeichnet, dass** die Vorbereitung der mobilen Endgeräte (M1, M2, M3, M4, M5) zur Bildung des virtuellen Netzwerks (N) inklusive der Freigabe-, Kommunikations- und eventueller Datenweiterleitungsfunktionalität durch Installation einer Software erfolgt.

11. Anordnung nach einem der vorherigen Ansprüche, **dadurch gekennzeichnet, dass** die über das virtuelle Netzwerk (N) abgewickelte Kommunikation Text-, Zeichen-, Sprach- und/oder Videonachrichten umfasst.

12. Anordnung nach einem der vorherigen Ansprüche, **dadurch gekennzeichnet, dass** über das virtuelle Netzwerk (N) der bi- oder multidirektionale Austausch von Nachrichten zwischen zwei oder mehr mobilen Endgeräten möglich ist.

13. Anordnung nach einem der vorherigen Ansprüche, **dadurch gekennzeichnet, dass** die über das virtuelle Netzwerk (N) laufende Kommunikation
- verschlüsselt und signiert, und/oder
- über eine andere Drahtlosschnittstelle als das Freigabesignal übertragen wird.

14. Anordnung nach einem der vorherigen Ansprüche, **dadurch gekennzeichnet, dass** sich in einem Raum (R) mobile Endgeräte (M1,M2,M3) und ein Relaisserver (S1) befinden, wobei die Endgeräte das virtuelle Netzwerk (N) bilden und in mindestens einem weiteren, physisch von (R) getrennten Raum (R') sich mobile Endgeräte (M4) und Relaisserver (S2) befinden, wobei die Relaisserver alle miteinander in Datenkommunikation stehen und weiterhin über drahtlose Schnittstellen zur Datenkommunikation mit den mobilen Endgeräten (M1, M2, M3, M4, M5) verfügen und die Relaisserver (S1, S2) so vorbereitet sind, dass durch sie das virtuelle Netzwerk (N) auch für die in (R') befindlichen mobilen Endgeräte (M4) zugänglich ist, sofern diese aufgrund des Empfangs des Freigabesignals oder der Freigabesignale in (R') befindlicher Signalgeber (B4) dafür freigeschaltet sind.

15. Anordnung nach Anspruch 14, **dadurch gekennzeichnet, dass** mindestens einer der Relaisserver (S1, S2) mindestens einen weiteren, über die reine Datenweiterleitung hinausgehenden, Dienst anbietet, der von allen für das virtuelle Netzwerk (N) freigeschalteten mobilen Endgeräten (M1, M2, M3, M4) nutzbar ist.

16. Anordnung nach einem der vorherigen Ansprüche, **dadurch gekennzeichnet, dass** die Signalgeber (B1, B2, B3, B4) anhand ihres Freigabesignals für die mobilen Endgeräte (M1, M2, M3, M4, M5) eindeutig identifizierbar sind.

17. Anordnung nach Anspruch 16, **dadurch gekennzeichnet, dass** die mobilen Endgeräte anhand aller zu einem Zeitpunkt empfangener Freigabesignale und der Identifikation der zugehörigen Signalgeber eine Position innerhalb der Räume (R) oder ggf. (R') ableiten.

18. Anordnung nach einem der Ansprüche 14-17, **dadurch gekennzeichnet, dass** mindestens einer der Relaisserver (S1, S2) auch ein Freigabesignalgeber ist.

19. Verfahren zur Ermöglichung auf einen begrenzten Raum beschränkter drahtloser Kommunikation unter Verwendung der Anordnung gemäß eines der Ansprüche 1-18, wobei durch Signalgeber (B1, B2, B3, B4) ein in Räumen (R, R') empfangbares Freigabesignal gesendet wird und nur dieses Freigabesignal empfangende mobile Endgeräte (M1, M2, M3, M5) zur Teilnahme an einem virtuellen Netzwerk (N) freigeschaltet werden,
**dadurch gekennzeichnet, dass**
- die empfangenden mobile Endgeräte (M1, M2, M3, M5) aus dem Freigabesignal eine Information ableiten, anhand derer sie zur Teilnahme an dem virtuellen Netzwerk (N) freigeschaltet werden,
- wobei diese Information
∘ ein Identifier ist, welcher das virtuelle Netzwerk (N) als Ganzes identifiziert, oder
∘ ein individueller und einzigartiger Identifier der Signalgeber (B1, B2, B3, B4) ist,
- und die entsprechend vorbereiteten mobilen Endgeräte (M1, M2, M3, M4, M5) über eine Liste aller authentischen Identifier verfügen, und
- zwischen den freigeschalteten mobilen Endgeräten (M1, M2, M3, M5) über das virtuelle Netzwerk (N) Datenkommunikation stattfindet.

20. Verfahren nach dem vorhergehenden Anspruch, **dadurch gekennzeichnet, dass** die Datenkommunikation zwischen den freigeschalteten mobilen Endgeräten (M1, M2, M3, M5)
- direkt, und/oder
- unter Verwendung
o eines der Freigabesignalgeber (B1, B2, B3, B4) und/oder
∘ eines Servers (S1, S2), und/oder
∘ eines der mobilen Endgeräte (M1, M2, M3, M5)
als Zwischenstation zur Datenweiterleitung stattfindet.

## Claims

1. System for enabling wireless communication in a defined space (R, R') comprising
- one or several immobile signal transmitters (B1, B2, B3, B4) providing a clearance signal,
- two or more mobile terminal devices (M1, M2, M3, M4, M5) capable of mutual direct wireless communication,
wherein each of the terminal devices (M1, M2, M3, M4, M5) is cleared for participation in a virtual network (N) only when receiving the clearance signal from at least one of the signal transmitters (B1, B2, B3, B4),
**characterized in that**
- the virtual network (N)
∘ is a communications network, over which data communication takes place between the cleared mobile terminal devices (M1, M2, M3, M4), and
∘ is formed by the entirety of the cleared mobile terminal devices (M1, M2, M3, M4), and
- the mobile terminal devices (M1, M2, M3, M4, M5) are configured such that they, upon reception of the clearance signal, derive an information therefrom on the basis of which they are cleared for participating in the virtual network (N),
- wherein the derived information
- is an identifier which identifies the network (N) as a whole, or
- is an individual and unique identifier of the signal transmitters (B1, B2, B3, B4),
- and the appropriately configured mobile terminal devices (M1, M2, M3, M4, M5) possess a list of all authentic identifiers.

2. System according to Claim 1, **characterized in that** the network (N) is at least partially a peer-to-peer network.

3. System according to Claim 1 or 2, **characterized in that** the transmission of the clearance signal of at least one of the signal transmitters (B1, B2, B3, B4) to the mobile terminal devices (M1, M2, M3, M4, M5) is done wirelessly.

4. System according to one of the preceding Claims, **characterized in that** the transmission of the clearance signal of at least one of the signal transmitters (B1, B2, B3, B4) to the mobile terminal devices (M1, M2, M3, M4, M5) is done wire-bound.

5. System according to Claim 3, **characterized in that** the accessibility of the wireless clearance signal by the mobile terminal devices (M1, M2, M3, M4, M5) is substantially restricted to the defined space (R, R'), wherein this is ensured by a combination of a low transmitting power and a positioning of the signal transmitters.

6. System according to Claim 4, **characterized in that** the accessibility of the wire-bound clearance signal by the mobile terminal devices (M1, M2, M3, M4, M5) is substantially restricted to the defined space (R, R'), wherein this is ensured by a combination of a positioning of the signal transmitters and a length of the signal-carrying cable/s.

7. System according to one of the preceding Claims, **characterized in that** the reception areas of all signal transmitters together cover the defined space (R, R').

8. System according to one of the preceding Claims, **characterized in that** the space (R, R') is a room in a building.

9. System according to one of the preceding Claims, **characterized in that** the mobile terminal devices (M1, M2, M3, M4, M5) and/or the clearance signal transmitters (B1, B2, B3, B4) are configured to relay communication taking place over the virtual network (N) between terminal devices that cannot contact each other directly, provided an indirect connection exists.

10. System according to one of the preceding Claims, **characterized in that** the configuration of the mobile terminal devices (M1, M2, M3, M4, M5) to form the virtual network (N) including the clearance, communication and potential data relay functionality is effected by the installation of a software.

11. System according to one of the preceding Claims, **characterized in that** the communication carried out over the virtual network (N) comprises text, character, voice and/or video messages.

12. System according to one of the preceding Claims, **characterized in that** over the virtual network (N) the bi- or multidirectional exchange of messages between two or more mobile terminal devices is possible.

13. System according to one of the preceding Claims, **characterized in that** the communication carried over the virtual network (N) is transmitted
- encrypted and signed, and/or
- through a different wireless interface as the clearance signal.

14. System according to one of the preceding Claims, **characterized in that** in a space (R) there are mobile terminal devices (M1, M2, M3) and a relay server (S1), wherein the mobile terminal devices form the virtual network (N) and in at last one further, from the space (R) physically separated space (R') there are mobile terminal devices (M4) and a relay server (S2), wherein the relay servers are all in data communication with each other and moreover possess wireless interfaces for data communication with the mobile terminal devices (M1, M2, M3, M4, M5) and the relay servers (S1, S2) are configured such that the virtual network (N) is accessible also to the mobile terminal devices (M4) in the space (R'), provided that they are cleared for this on the basis of the reception of the clearance signal of signal transmitters present in (R').

15. System according to Claim 14, **characterized in that** at least one of the relay servers (S1, S2) offers at least one additional service beyond the basic relaying of data usable by all mobile terminal devices (M1, M2, M3, M4) cleared for the virtual network (N).

16. System according to one of the preceding Claims, **characterized in that** the signal transmitters (B1, B2, B3, B4), based on their clearance signal, are uniquely identifiable for the mobile terminal devices (M1, M2, M3, M4, M5).

17. System according to one of the preceding Claims, **characterized in that** the mobile terminal devices derive a position within the spaces (R) or, if applicable, (R') based on all clearance signals received at a given time and the identification of the corresponding signal transmitters.

18. System according to one of the Claims 14 - 17, **characterized in that** at least one of the relay servers (S1, S2) is also a signal transmitter.

19. Method of enabling wireless communication restricted to a defined space using a system according to one of the Claims 1 - 18, wherein by signal transmitters (B1, B2, B3, B4) a clearance signal receivable in spaces (R, R') is sent and only mobile terminal devices (M1, M2, M3, M5) receiving this clearance signal are cleared for participating in a virtual network (N),
**characterized in that**
- the receiving mobile terminal devices (M1, M2, M3, M5) derive from the clearance signal an information based on which they are cleared for participating in the virtual network (N),
- wherein this information
∘ is an identifier, which identifies the network (N) as a whole, or
∘ is an individual and unique identifier of the signal transmitters (B1, B2, B3, B4),
- and the appropriately configured mobile terminal devices (M1, M2, M3, M4, M5) possess a list of all authentic identifiers, and
- data communication between the cleared mobile terminal devices (M1, M2, M3, M5) takes place over the network (N).

20. Method according to the preceding Claim, **characterized in that** the data communication between the cleared mobile terminal devices (M1, M2, M3, M5) takes place
- directly, and/or
- using
∘ one of the clearance signal transmitters (B1, B2, B3, B4), and/or
∘ a server (S1, S2), and/or
∘ one of the mobile terminal devices (M1, M2, M3, M5) as an intermediate station for relaying the data.

## Revendications

1. Disposition destinée à permettre une communication sans fil dans un espace limité (R, R') comprenant
- un ou plusieurs générateurs de signaux fixes, un générateur de signaux mettant un signal d'activation à disposition (B1, B2, B3, B4),
- deux appareils finaux mobiles (M1, M2, M3, M4, M5) ou plus capables d'établir une communication sans fil entre eux, sachant que chacun des appareils finaux mobiles (M1, M2, M3, M4, M5) n'est à chaque fois activé que lors de la réception du signal d'activation d'au moins un des générateurs de signaux (B1, B2, B3, B4) pour participer à un réseau virtuel (N),
**caractérisée par le fait que**
- le réseau virtuel (N)
∘ est un réseau de communication dans le cadre duquel une communication des données a lieu entre les finaux mobiles activés (M1, M2, M3, M4), qui
∘ est formé par la totalité des appareils finaux mobiles (M1, M2, M3, M4) activés, et que
- les appareils finaux mobiles (M1, M2, M3, M4, M5) sont préparés de façon à déduire de la réception du signal d'activation une information en vertu de laquelle ils sont activés pour participer au réseau de communication virtuelle (N),
- sachant que cette information déduite
- est un identifiant qui identifie le réseau (N) dans son intégralité, ou bien
- est un identifiant de générateur de signaux (B1, B2, B3, B4) individuel et unique,
- les appareils finaux mobiles (M1, M2, M3, M4, M5) préparés en conséquence disposant d'une liste de tous les identifiants authentiques.

2. Disposition selon la revendication 1, **caractérisée par le fait que** le réseau (N) est, au moins en partie, un réseau Peer-to-Peer.

3. Disposition selon la revendication 1 ou 2, **caractérisée par le fait que** la transmission du signal d'activation d'au moins un des générateurs de signaux (B1, B2, B3, B4) aux appareils finaux mobiles (M1, M2, M3, M4, M5) a lieu sans fil.

4. Disposition selon une des revendications précédentes, **caractérisée par le fait que** la transmission du signal d'activation d'au moins un des générateurs de signaux (B1, B2, B3, B4) à un des appareils finaux mobiles (M1, M2, M3, M4, M5) est filaire.

5. Disposition selon la revendication 3, **caractérisée par le fait que** l'accès du signal d'activation sans fil par les appareils finaux mobiles (M1, M2, M3, M4, M5) est essentiellement limité à l'espace limité (R, R'), sachant que ceci est assuré par la combinaison d'une basse puissance et d'émission et du positionnement des générateurs de signaux.

6. Disposition selon la revendication 4, **caractérisée par le fait que** l'accès du signal d'activation filaire par les appareils finaux mobiles (M1, M2, M3, M4, M5) est essentiellement limité à l'espace limité (R, R'), sachant que ceci est assuré par une combinaison du positionnement des générateurs de signaux et de la longueur des câbles portant le signal.

7. Disposition selon une des revendications précédentes, **caractérisée par le fait que** les plages de réception de tous les générateurs de signaux pris ensemble couvrent l'espace limité (R, R').

8. Disposition selon une des revendications précédentes, **caractérisée par le fait que** l'espace (R, R') est un espace à l'intérieur d'un bâtiment.

9. Disposition selon une des revendications précédentes, **caractérisée par le fait que** les appareils finaux mobiles (M1, M2, M3, M4, M5) et/ou le générateur de signaux d'activation (B1, B2, B3, B4) sont préparés de façon à transmettre la communication passant via le réseau (N) entre appareils finaux qui ne peuvent pas entrer directement en contact, dans la mesure où une connexion indirecte existe.

10. Disposition selon une des revendications précédentes, **caractérisée par le fait que** la préparation des appareils finaux mobiles (M1, M2, M3, M4, M5) pour former le réseau (N), y compris la fonctionnalité d'activation, de communication et éventuellement de transmission de données ait lieu en installant un logiciel.

11. Disposition selon une des revendications précédentes, **caractérisée par le fait que** la communication traitée par le réseau (N) comprend des textes, des signes et des messages audio et vidéo.

12. Disposition selon une des revendications précédentes, **caractérisée par le fait que** l'échange bidirectionnel ou multidirectionnel de messages via le réseau (N) entre deux ou plusieurs appareils finaux mobiles est possible.

13. Disposition selon une des revendications précédentes, **caractérisée par le fait que** la communication passant par le réseau (N) est transmise
- cryptée et signée, et/ou
- en tant que signal d'activation par l'intermédiaire d'une autre interface sans fil.

14. Disposition selon une des revendications précédentes, **caractérisée par le fait que** dans un espace (R) se trouvent des appareils finaux mobiles (M1 ,M2,M3) et des serveurs de relais (S1), sachant que les appareils finaux constituent un réseau (N) et que dans au moins un autre espace (R') physiquement séparé de (R) se trouvent des appareils finaux mobiles (M4) et des serveurs de relais (S2), sachant que tous les serveurs de relais communiquent des données entre eux et disposent en outre d'interfaces sans fil pour la communication de données avec les appareils finaux mobiles (M1, M2, M3, M4, M5) et que les serveurs de relais (S1, S2) sont préparés de façon à permettre que le réseau (N) soit également accessible aux appareils finaux mobiles (M4) se trouvant dans (R') dès lors que ces derniers soient activés à cet effet du fait de la réception du signal d'activation ou des signaux d'activations émis par les générateurs de signaux (B4) se trouvant dans (R').

15. Disposition selon la revendication 14, **caractérisée par le fait qu'**au moins un des serveurs de relais (S1, S2) propose au moins un autre service allant au-delà de la seule transmission de données, qui peut être utilisé par tous les appareils finaux mobiles (M1, M2, M3, M4) activés pour le réseau (N).

16. Disposition selon une des revendications précédentes, **caractérisée par le fait que** les générateurs de signaux (B1, B2, B3, B4) peuvent être clairement identifiés à partir de leur signal d'activation pour les appareils finaux mobiles (M1, M2, M3, M4, M5).

17. Disposition selon la revendication 16, **caractérisée par le fait que** les appareils finaux mobiles déduisent une position à l'intérieur des espaces (R) ou le cas échéant (R') à partir de tous les signaux d'activation reçus à un moment et de l'identification des générateurs de signaux afférents.

18. Disposition selon une des revendications 14 à 17, **caractérisée par le fait qu'**au moins un des serveurs de relais (S1, S2) est également aussi un générateur de signaux d'activation.

19. Procédé destiné à permettre sur une espace limité une communication sans fil en utilisant la disposition selon une des revendications 1 à 18, sachant que les générateurs de signaux (B1, B2, B3, B4) émettent un signal d'activation pouvant être reçus dans des espaces (R, R') et que seuls les appareils finaux mobiles (M1, M2, M3, M5) recevant ce signal d'activation sont activés pour participer à un réseau virtuel (N),
**caractérisé par le fait que**
- les appareils finaux mobiles (M1, M2, M3, M5) récepteurs déduisent du signal d'activation une information à partir de laquelle ils sont activés pour participer à un réseau de communication virtuel (N),
- sachant que cette information
∘ est un identifiant qui identifié le réseau (N) dans son intégralité, ou
∘ est un identifiant des générateurs de signaux (B1, B2, B3, B4) individuel et unique en son genre,
- les appareils finaux mobiles (M1, M2, M3, M4, M5) préparés en conséquence disposant d'une liste de tous les identifiants authentiques,
- la communication des données entre les appareils finaux mobiles (M1, M2, M3, M5) activés passant par le réseau (N).

20. Procédé selon la revendication précédente, **caractérisé par le fait que** la communication de données entre les finaux mobiles activés (M1, M2, M3, M5) a lieu
- directement, et/ou
- en utilisant
∘ un des générateurs de signaux d'activation (B1, B2, B3, B4) et/ou
∘ un serveur (S1, S2), et/ou
∘ un des appareils finaux mobiles (M1, M2, M3, M5)
comme station intermédiaire pour transmettre les données.
